# FASCICULE DE BREVET EUROPEEN

(11) **EP 0 904 881 B1**
(45) Date de publication et mention de la délivrance du brevet: **28.05.2003**
(21) Numéro de dépôt: 98402289.7
(22) Date de dépôt: 17.09.1998
(51) Int. Cl.: B23K 1/00

(54) **Procédé d'assemblage ou de rechargement par brasage-diffusion de pièces en aluminiure de titane**
Verbund- oder Auftragsdiffusionlötsverfahren von aus Titanaluminid hergestellten Werkstücken
Assembling or build-up diffusion brazing method of titanium aluminide workpieces

(30) Priorité: 18.09.1997 FR 9711624
(43) Date de publication de la demande: 31.03.1999
(73) Titulaire: SNECMA MOTEURS, 75015 Paris (FR)
(72) Inventeur: Clement, Jean-François Didier, 91330 Yerres (FR); Ferte, Jean-Pierre, 91100 Corbeil Essonnes (FR)
(74) Mandataire: Berrou, Paul

(56) Documents cités:
- FR-A- 2 370 545
- US-A- 5 318 214
- PATENT ABSTRACTS OF JAPAN vol. 18, no. 679 (M-1728), 21 décembre 1994 & JP 06 269931 A (VACUUM METALLURGICAL CO LTD), 27 septembre 1994

## Description

La présente invention concerne un procédé d'assemblage par brasage-diffusion de pièces en matériau intermétallique du type aluminiure de titane. Le procédé est également utilisable en réparation ou pour effectuer un rechargement de pièce.

Divers matériaux intermétalliques ont été développés présentant des propriétés intéressantes et des avantages d'utilisation pour certaines applications particulières, notamment dans le domaine aéronautique, par rapport aux alliages et superalliages métalliques classiques. On trouve notamment parmi ces composés des aluminiures de titane de type TiAl ou Ti₃Al particulièrement visés par la présente invention. Ces matériaux sont mis en forme par fonderie ou par forgeage. US 4 294 615 décrit par exemple un matériau TiAl de ce type. Ces matériaux peuvent en outre comporter divers éléments d'apport en fonction des applications recherchées tels que Nb, Mo, Si, Zr, V, Ta etc.

Toutefois l'assemblage des pièces obtenues présente des difficultés particulières actuellement insuffisamment résolues. En effet, les techniques d'assemblage connues et appliquées aux matériaux classiques, alliages et superalliages métalliques, se révèlent mal adaptées à ces nouveaux matériaux intermétalliques. Notamment, les procédés d'assemblage avec fusion, avec ou sans métal d'apport, du type soudage par faisceau d'énergie, faisceau d'électrons ou faisceau laser ou à l'arc électrique par procédé TIG ou à plasma ont l'inconvénient de modifier profondément la structure métallurgique du matériau, ce qui entraine des difficultés particulières d'utilisation dans des matériaux fragiles que sont les composés intermétalliques. Ainsi sur des pièces en aluminiure de titane des problèmes de fissuration sont couramment observés du fait des contraintes thermiques élevées développées lors de la mise en oeuvre de ces procédés classiques et aussi de la faible ductilité des matériaux. D'autres procédés comme le soudage-diffusion et le soudage par friction prévoient de réaliser l'assemblage à l'état solide. Toutefois, le soudage-diffusion nécessite des surfaces d'accostage possédant une qualité géométrique parfaite et un contrôle très contraignant des conditions de propreté et de cycle thermique. Le soudage par friction demande des qualités rhéologiques particulières et se prête mal à un certain nombre de configurations d'assemblage.

Des essais au stade de laboratoire ont montré qu'un assemblage de pièces en aluminiure de titane par brasage-diffusion évitait les problèmes de fissuration du fait de la non génération de contraintes thermiques lors de sa mise en oeuvre. Les métaux d'apport utilisés dans ce cas le sont classiquement lors de l'assemblage de pièces en alliages de titane et sont par exemple du type Cu, TiCu, TiNi, ou TiCu à 15% et Ni à 15%. Mais ce procédé utilisé dans ces conditions connues impose des limitations strictes pour assurer une qualité acceptable des résultats. En effet, le jeu d'assemblage est limité à 0,1 - 0,2 mm. L'application d'une pression d'assemblage est souvent requise. En outre, des rechargements de surface d'épaisseur significative ne peuvent pas être envisagés.

Un des buts de l'invention est d'obtenir un procédé d'assemblage ou de rechargement par brasage-diffusion de pièces en aluminiure de titane ne présentant par les inconvénients des procédés connus antérieurs et assurant un standard suffisant de qualité notamment tel qu'il est requis dans le domaine aéronautique.

Un procédé d'assemblage par brasage-diffusion de pièces en aluminiure de titane répondant à ces conditions comporte les étapes suivantes :
a) réalisation d'un mélange homogène de poudres A et B, la poudre A constituée d'un alliage d'aluminiure de titane représentant une proportion en poids de 40% à 90% du total et la poudre B constituée d'un alliage à base de titane ou de cuivre, fondant à une température nettement inférieure à la température de début de fusion de la poudre A, capable de mouiller chimiquement la poudre A et représentant une proportion en poids de 10 à 60% du total, lesdites proportions de poudres A et B étant déterminées en fonction des paramètres de la mise en oeuvre du procédé, température et granulométrie des poudres ;
b) réalisation d'un pâte par mélange d'un liant organique, connu en soi dans les techniques de brasage, au mélange de poudres obtenu à l'étape précédente (a) ;
c) dépôt de la pâte à l'aplomb du jeu d'assemblage des pièces;
d) chauffage de l'ensemble obtenu à l'étape précédente (c)dans un four sous vide, à une température comprise entre 1000°C et 1300°C pendant une durée comprise entre quelques minutes et 6 heures.

La réalisation d'une réparation de pièce en aluminiure de titane est effectuée en suivant les étapes (a), (b) et (d) identiques au procédé décrit ci-dessus et à l'étape intermédiaire (c), la pâte obtenue est déposée à l'aplomb de la fissure sur la pièce à réparer.

De même, le rechargement d'au moins une surface d'une pièce en aluminiure de titane est également effectué en suivant les étapes (a), (b) et (d) identiques au procédé décrit ci-dessus et à l'étape intermédiaire (c), la pâte est déposée sur la surface de pièce à recharger.

Une méthode alternative de rechargement peut être réalisée à partir de compacts autobrasables. La réalisation de ces derniers commence par l'étape (a) décrite précédemment, le mélange est ensuite placé dans un moule inerte chimiquement. L'étape (d) est ensuite réalisée avec une durée réduite à quelques minutes pour éviter la diffusion complète des éléments de la poudre B dans celle de la poudre A. Le compact garde une capacité de brasage et peut être utilisé pour recharger une surface.

Ce mode de réalisation de compacts autobrasables permet si l'étape (d) est réalisée complètement de réaliser des formes denses.

Avantageusement, dans certaines applications, on choisit une poudre A de composition en pourcentages atomiques Al 46 à 50, Cr2, Nb2 et le reste Ti et une poudre B de composition en pourcentages pondéraux Cu15, Ni15 et le reste Ti ou une poudre B de composition en pourcentages pondéraux Ti30 et le reste Cu.

Pour d'autres applications, on choisit une poudre A de composition en pourcentages atomiques Al 46 à 50, Mn 2, Nb2 et le reste Ti et une poudre B de composition en pourcentages pondéraux Cu15, Ni15 et le reste Ti ou une poudre B de composition en pourcentages pondéraux Ti30 et le reste Cu.

En fonction des applications, la granulométrie déterminée des poudres A et B utilisées est soit inférieure à 63µm, soit inférieure à 150µm.

D'autres caractéristiques et avantages de l'invention seront mieux compris à l'aide de la description ci-après de quelques exemples d'application sur pièces en aluminiure de titane du procédé de brasage-diffusion selon l'invention, en référence aux dessins annexés sur lesquels :
- la figure 1 représente une vue schématique en perspective d'un joint < bord à bord > préparé en vue de l'assemblage de pièces en aluminiure de titane suivant un mode de réalisation du procédé conforme à l'invention
- la figure 2 représente le joint de la figure 1 après assemblage ;
- les figures 3 et 4 représentent des vues similaires à celles des figures 1 et 2 d'un joint à clin ;
- la figure 5 représente une vue schématique partielle en coupe d'un sommet d'aube rechargé suivant un procédé conforme à l'invention ;
- la figure 6 représente la pièce de la figure 5 après rechargement ;
- la figure 7 montre une microphotographie de structure obtenue après le rechargement représenté sur les figures 5 et 6;
- les figures 8 et 9 représentent des vues similaires à celles des figures 5 et 6 montrant la réparation d'un défaut local sur une pièce suivant un procédé conforme à l'invention;
- les figures 10 et 11 représentent des vues schématiques en coupe montrant le procédé de réalisation d'un élément compact en aluminiure de titane conforme à l'invention ;
- les figures 12 et 13 représentent des vues schématiques en coupe montrant un exemple de réalisation du procédé de rechargement de pièce à partir d'un compact autobrasable conforme à l'invention.

### EXEMPLE 1

Dans cette première application du procédé conforme à l'invention, il s'agit d'assembler bord à bord deux pièces en aluminiure de titane dont l'épaisseur dans l'exemple réalisé est comprise entre 2 et 6 mm. La composition du matériau en pourcentages atomiques comprend Al48, Cr2, Nb2 et le reste Ti.

Dans la première étape (a) du procédé, on réalise un mélange homogène de poudres A et B dans une proportion en poids 50-50. La poudre A est de composition identique aux pièces à assembler, comprenant en pourcentages atomiques Al48, Cr2, Nb2 et le reste Ti. La poudre B a une composition en pourcentages pondéraux de Cu15, Ni15 et le reste Ti. La granulométrie des poudres A et B est inférieure à 63µm.

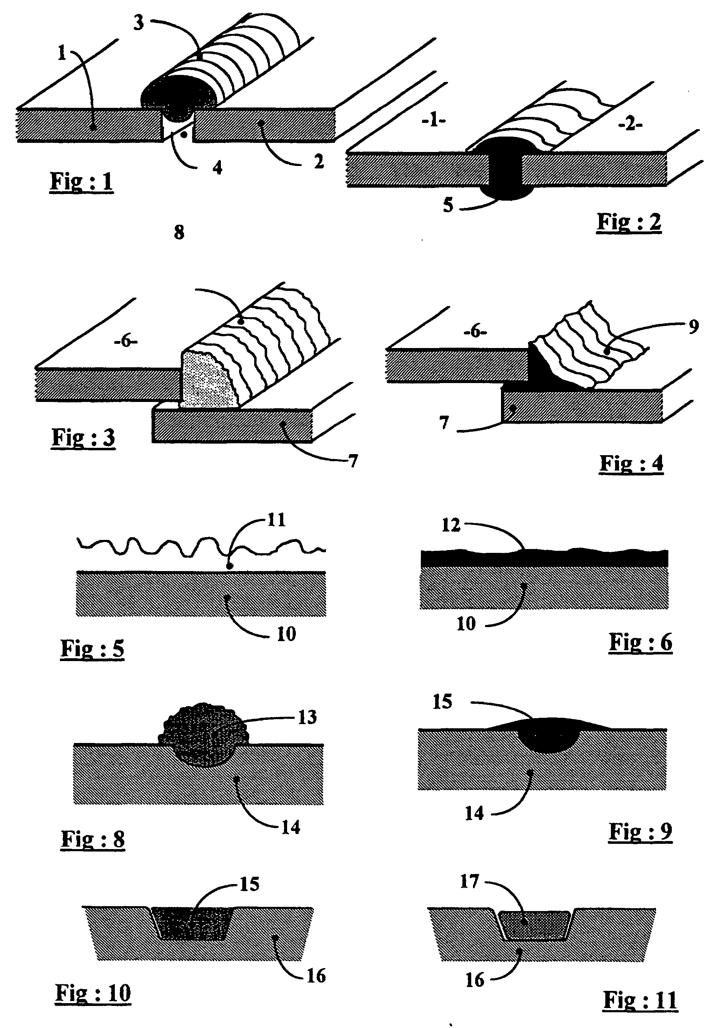

A l'étape suivante (b), on réalise une pâte par mélange de la poudre à un liant organique, connu en soi dans les techniques de brasage. A l'étape suivante (c), comme schématiquement représenté sur la figure 1, la pâte 3 est déposée à l'aplomb du jeu d'assemblage 4 entre les pièces 1 et 2 en aluminiure de titane disposées bord à bord. De manière connue en soi, avant dépôt de la pâte, les pièces 1 et 2 à assembler sont rendues solidaires par la mise en place de billes en titane soudées par résistance. Dans cet exemple, la pâte est déposée à l'aide d'une seringue et la quantité déposée est d'environ 2 à 4 fois le volume du jeu d'assemblage. Seule une limite pratique est fixée au jeu d'assemblage qui varie dans l'exemple de réalisation entre 0 et 0,5 mm.

A l'étape suivante (d), l'ensemble obtenu est chauffé dans un four sous vide à 1260°C pendant quatre heures. On obtient un remplissage complet du joint d'assemblage des pièces 1 et 2 tel qu'indiqué en 5 sur la figure 2. La température de chauffage est déterminée pour être à la fois supérieure à la température de fusion de la poudre B et inférieure à la température de fusion de la poudre A. Durant le maintien en température, le mélange déposé 3 se densifie sous l'effet des forces de capillarité et simultanément mouille les surfaces des pièces 1 et 2 à assembler, de manière à obtenir une liaison métallurgique satisfaisante par brasage-diffusion avec lesdites pièces.

Le jeu 4 représenté sur la figure 1 peut également correspondre à une fissure sur toute l'épaisseur d'une pièce endommagée, telle qu'une virole en aluminiure de titane qui, dans l'exemple de réalisation, a une épaisseur comprise entre 2 et 6 mm et présente une composition en pourcentages atomiques de Al48,Cr2, Nb2 et le reste Ti. Dans ce cas, les étapes du procédé précédemment décrites correspondent à un procédé de réparation d'une pièce en aluminiure de titane par brasage-diffusion.

L'assemblage réalisé peut également être à clin entre deux pièces 6 et 7 en aluminiure de titane, tel que schématiquement représenté sur les figures 3 et 4. Dans ce cas, les étapes du procédé conforme à l'invention précédemment décrites sont suivies à l'identique et à l'étape (c), la pâte 8 est déposée dans l'angle de l'assemblage et comme précédemment, après chauffage au four sous vide, un cordon 9 assure la liaison métallurgique entre les pièces 6 et 7.

### EXEMPLE 2

Dans cette application du procédé conforme à l'invention, il s'agit de recharger une surface d'une pièce en aluminiure de titane. Dans l'exemple réalisé, la pièce 10 schématiquement représentée sur les figures 5 et 6 est une aube de turbomachine de composition en pourcentages atomiques de Al48, Cr2, Nb2 et le reste Ti.

Dans la première étape (a) du procédé on réalise un mélange homogène d'une poudre A de composition identique à la pièce 10, comprenant en pourcentages atomiques Al48, Cr2, Nb2 et le reste Ti et d'une poudre B de composition en pourcentages pondéraux du Cu15, Ni15 et le reste Ti. La granulomérie des poudres inférieure à 63pm. Le mélange est réalisé en proportions pondérales de 60% de poudre A et 40% de poudre B.

A l'étape suivante (b), on réalise une pâte par mélange de la poudre à un liant organique, connu en soi dans les techniques de brasage.

A l'étape suivante (c), comme schématiquement représenté sur la figure 5, la pâte est déposée sur le sommet à recharger de l'aube 10, à l'aide d'une seringue, en plusieurs fois, de manière à obtenir un dépôt 11, d'épaisseur d'environ 3 mm, débordant largement sur les parois de l'aube 10.

A l'étape suivante (d), l'ensemble est chauffé dans un four sous vide à 1260°C pendant quatre heures. Une densification complète du mélange est obtenue ainsi qu'une liaison métallurgique du dépôt 12 avec le substrat constitué par la pièce 10, tel que schématiquement représenté sur la figure 6. La figure 7 montre la microstructure métallurgique obtenue.Enfin, un usinage final approprié permet d'obtenir un ragréage du sommet de l'aube 10.

En variante, à l'étape (c), le dépôt peut être effectué en utilisant d'autres moyens, tels que par projection au chalumeau à plasma ou en associant une alimentation de poudre et un faisceau à haute énergie tel que laser.

Le rechargement de surface d'une pièce en aluminiure de titane tel qu'il vient d'être décrit peut être effectué sur une pièce neuve en cours de fabrication ou, comme dans l'exemple de l'aube 10 décrit en référence aux figures 5 et 6 où la surface rechargée peut être le sommet usé de l'aube, le rechargement peut être effectué sur une pièce usagée. Le rechargement peut également être appliqué dans le cas d'une réparation d'une surface présentant un défaut de forme, comme dans l'exemple représenté sur les figures 8 et 9. Après un dépôt de pâte 13 sur la pièce 14, une réparation est obtenue en 15 et à nouveau terminée par un ragréage de surface.

### EXEMPLE 3

Dans cette application du procédé conforme à l'invention, il s'agit de réaliser un élément compact de forme déterminée en aluminiure de titane. Comme précédemment décrit dans les exemples 1 et 2, dans la première étape (a) on réalise un mélange homogène de poudres A et B dans une proportion en poids de 60% en poudre A et 40% en poudre B. La poudre A a une composition en pourcentages pondéraux de Cu15, Ni15 et le reste Ti. La poudre B a une composition en pourcentages atomiques de Al48, Cr2, Nb2 et le reste Ti. La granulométrie des poudres A et B est inférieure à 63µm.

A l'étape suivante (b), comme schématiquement représenté sur la figure 10, on met en place le mélange 15 de poudres obtenu à l'étape précédente (a) dans un moule 16 en alumine dont la forme en creux est semblable à la forme externe de l'élement compact à obtenir mais de taille supérieure avec une homothétie d'environ 110%.

A l'étape suivante (c) l'ensemble obtenu à l'étape précédente (b) est chauffé en four sous vide à 1260°C pendant quatre heures.

Dans tous les cas, le matériau du moule 16 est déterminé chimiquement inerte vis à vis du matériau en aluminiure de titane. A l'étape (c) une température de chauffage plus élevée permet d'obtenir une densification maximale et dans ce cas, l'élément compact 17 obtenu peut constituer une pièce finie de forme en aluminiure de titane.

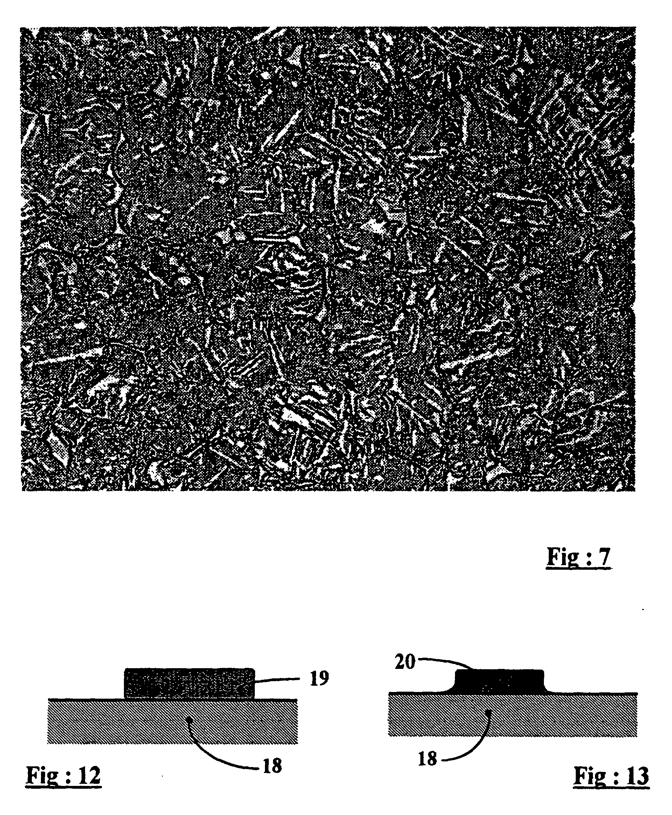

Pour d'autres applications, à l'étape (c) une température de chauffage est déterminée sensiblement inférieure à la température de densification complète. Cette opération conduit, parallèlement à une densification élevée mais incomplète, à un rétreint du volume conduisant à un élément compact 17 de forme sensiblement homothétique à celle du moule 16, comme représenté sur la figure 11. Dans ce cas, l'élément compact 17 obtenu conserve une capacité résiduelle à se braser sur une surface de pièce en aluminiure de titane lorsqu'il sera porté à la température de densification complète. L'élément compact 17 peut ainsi être utilisé comme élément fritté autobrasable. Les figures 12 et 13 illustrent ainsi un exemple schématique de rechargement d'une pièce 18 à partir d'un élément fritté autobrasable 19. L'élément fritté 19, de dimensions adaptées à la surface à recharger, est déposé à la surface de la pièce 18 neuve ou usagée à recharger puis l'élément fritté 19 est solidarisé à la pièce 18 par un ou plusieurs points de soudage par résistance. L'ensemble est ensuite porté dans un four sous vide à la température de densification complète, allant de 1000°C à 1300°C suivant la composition déterminée du mélange fritté. On obtient ainsi, en plus du complément de densification, une liaison métallurgique entre l'élément fritté 20 et la pièce 18. La durée de maintien à température varie de quelques minutes à plusieurs heures suivant la composition déterminée du mélange et le niveau d'homogénéisation chimique désiré. Un usinage final adapté à la fonction de la pièce 18 permet l'ajustage du rechargement.

## Revendications

1. Procédé d'assemblage par brasage-diffusion de pièces en aluminiure de titane comportant les étapes suivantes :
(a) réalisation d'un mélange homogène de poudres A et B, la poudre A constituée d'un alliage d'aluminiure de titane représentant une proportion en poids de 40% à 90% du total et la poudre B constituée d'un alliage à base de titane ou de cuivre, fondant à une température nettement inférieure à la température de début de fusion de la poudre A, capable de mouiller chimiquement la poudre A et représentant une proportion en poids de 10 à 60% du total, lesdites proportions de poudres A et B étant déterminées en fonction des paramètres de la mise en oeuvre du procédé, température et granulométries des poudres ;
(b) réalisation d'une pâte par mélange d'un liant organique, connu en soi dans les techniques de brasage, au mélange de poudres obtenu à l'étape précédente (a) ;
(c) dépôt de la pâte à l'aplomb du jeu d'assemblage des pièces ;
(d) chauffage de l'ensemble obtenu à l'étape précédente (c) dans un four sous vide à une température comprise entre 1000°C et 1300°C, pendant une durée comprise entre quelques minutes et 6 heures.

2. Procédé de réparation par brasage-diffusion d'une pièce en aluminiure de titane comportant les étapes suivantes :
(a) réalisation d'un mélange homogène de poudres A et B, la poudre A constituée d'un alliage d'aluminiure de titane représentant une proportion en poids de 40% à 90% du total et la poudre B constituée d'un alliage à base de titane ou de cuivre, fondant à une température nettement inférieure à la température de début de fusion de la poudre A, capable de mouiller chimiquement la poudre A et représentant une proportion en poids de 10 à 60% du total, lesdites proportions de poudres A et B étant déterminées en fonction des paramètres de la mise en oeuvre du procédé, température et granulométries des poudres ;
(b) réalisation d'une pâte par mélange d'un liant organique, connu en soi dans les techniques de brasage, au mélange de poudres obtenu à l'étape précédente (a) ;
(c) dépôt de la pâte à l'aplomb de la fissure sur la pièce à réparer ;
(d) chauffage de l'ensemble obtenu à l'étape précédente (c) dans un four sous vide, à une température comprise entre 1000°C et 1300°C, pendant une durée comprise entre quelques minutes et 6 heures.

3. Procédé de rechargement d'au moins une surface de pièce en aluminiure de titane comportant les étapes suivantes :
(a) réalisation d'un mélange homogène de poudres A et B, la poudre A constituée d'un alliage d'aluminiure de titane représentant une proportion en poids de 40% à 90% du total et la poudre B constituée d'un alliage à base de titane ou de cuivre, fondant à une température nettement inférieure à la température de début de fusion de la poudre A, capable de mouiller chimiquement la poudre A et représentant une proportion en poids de 10 à 60% du total, lesdites proportions de poudres A et B étant déterminées en fonction des paramètres de la mise en oeuvre du procédé, température et granulométries des poudres ;
(b) réalisation d'une pâte par mélange d'un liant organique, connu en soi dans les techniques de brasage, au mélange de poudres obtenu à l'étape précédente (a) ;
(c) dépôt de la pâte sur la surface de pièce à recharger ;
(d) chauffage de l'ensemble obtenu à l'étape précédente (c) dans un four sous vide à une température comprise entre 1000°C et 1300°C, pendant une durée comprise entre quelques minutes et 6 heures.

4. Procédé de rechargement d'au moins une surface de pièce en aluminiure de titane selon la revendication 3 **caractérisé en ce que** à l'étape (c), le dépôt de la pâte est effectué au moyen d'une seringue.

5. Procédé de rechargement d'au moins une surface de pièce en aluminiure de titane selon la revendication 3 **caractérisé en ce que** à l'étape (c), le dépôt de la pâte est effectué par projection au chalumeau à plasma.

6. Procédé de rechargement d'au moins une surface de pièce en aluminiure de titane selon la revendication 3 **caractérisé en ce que** à l'étape (c), le dépôt de la pâte est effectué par projection au moyen d'une alimentation de poudre assistée d'un faisceau à haute énergie tel que laser.

7. Procédé de réalisation d'un élément compact à forme déterminée en aluminiure de titane comportant les étapes suivantes :
(a) réalisation d'un mélange homogène de poudres A et B, la poudre A constituée d'un alliage d'aluminiure de titane représentant une proportion en poids de 40% à 90% du total et la poudre B constituée d'un alliage à base de titane ou de cuivre, fondant à une température nettement inférieure à la température de début de fusion de la poudre A, capable de mouiller chimiquement la poudre A et représentant une proportion en poids de 10 à 60% du total, lesdites proportions de poudres A et B étant déterminées en fonction des paramètres de la mise en oeuvre du procédé, température et granulométries des poudres ;
(b) mise en place du mélange de poudres obtenu à l'étape précédente (a) dans un moule de forme homothétique à la forme de l'élément compact à obtenir
(c) chauffage de l'ensemble obtenu à l'étape précédente (b) dans un four sous vide, à une température comprise entre 1000°C et 1300°C, pendant une durée comprise entre quelques minutes et 1 heure.

8. Procédé de rechargement d'au moins une surface de pièce en aluminiure de titane, utilisant un élément compact obtenu suivant la revendication 7 et **caractérisé en ce que** ledit élément compact est mis en place puis fixé sur la surface à recharger par tout moyen connu en soi et ensuite l'ensemble est chauffé dans un four sous vide, à une température comprise entre 1000°C et 1300°C pendant une durée comprise entre quelques minutes et 6 heures.

9. Procédé d'assemblage par brasage-diffusion de pièces en aluminiure de titane selon la revendication 1 **caractérisé en ce que** la poudre A présente une composition en pourcentages atomiques de Al 46 à 50, Cr2, Nb2, et Ti pour le reste et la poudre B présente une composition en pourcentages pondéraux de Cu 10 à 15, Ni 10 à 15 et Ti pour le reste.

10. Procédé d'assemblage par brasage-diffusion de pièces en aluminiure de titane selon la revendication 1 **caractérisé en ce que** la poudre A présente une composition en pourcentages atomiques de Al 46 à 50, Cr2, Nb2 et Ti pour le reste et la poudre B présente une composition en pourcentages pondéraux de Ti30 et Cu pour le reste.

11. Procédé d'assemblage par brasage-diffusion de pièces en aluminiure de titane selon l'une quelconque des revendications 1, 9 et 10 **caractérisé en ce que** les poudres A et B ont une granulométrie inférieure à 63µm.

12. Procédé d'assemblage par brasage-diffusion de pièces en aluminiure de titane selon l'une quelconque des revendications 1, 9 et 10 **caractérisé en ce que** les poudres A et B ont une granulométrie inférieure à 150µm.

13. Procédé de réalisation d'une réparation par brasage-diffusion d'une pièce en aluminiure de titane selon la revendication 2 **caractérisé en ce que** la poudre A présente une composition en pourcentages atomiques de Al 46 à 50, Cr2, Nb2, et Ti pour le reste et la poudre B présente une composition en pourcentages pondéraux de Cu 10 à 15, Ni 10 à 15 et Ti pour le reste.

14. Procédé de réalisation d'une réparation par brasage-diffusion d'une pièce en aluminiure de titane selon la revendication 2 **caractérisé en ce que** la poudre A présente une composition en pourcentages atomiques de Al 46 à 50, Cr2, Nb2 et Ti pour le reste et la poudre B présente une composition en pourcentages pondéraux de Ti30 et Cu pour le reste.

15. Procédé de réalisation d'une réparation par brasage-diffusion d'une pièce en aluminiure de titane selon les revendications 2, 13 et 14, en ce que les poudres A et B ont une granulométrie inférieure à 63µm.

16. Procédé de réalisation d'une réparation par brasage-diffusion d'une pièce en aluminiure de titane selon les revendications 2, 13 et 14, en ce que les poudres A et B ont une granulométrie inférieure à 150µm.

17. Procédé de rechargement d'au moins une surface de pièce en aluminiure de titane selon l'une quelconque des revendications 3 à 6 et 8 **caractérisé en ce que** la poudre A présente une composition en pourcentages atomiques de Al 56 à 50, Cr2, Nb2, et Ti pour le reste et la poudre B présente une composition en pourcentages pondéraux de Cu 10 à 15, Ni 10 à 15 et Ti pour le reste.

18. Procédé de rechargement d'au moins une surface de pièce en aluminiure de titane selon l'une quelconque des revendications 3 à 6 et 8 **caractérisé en ce que** la poudre A présente une composition en pourcentages atomiques de Al 46 à 50, Cr2, Nb2 et Ti pour le reste et la poudre B présente une composition en pourcentages pondéraux de Ti30 et Cu pour le reste.

19. Procédé de rechargement d'au moins une surface de pièce en aluminiure de titane selon l'une quelconque des revendications 3 à 6 et 8, 17 et 18, **caractérisé en ce que** les poudres A et B ont une granulométrie inférieure à 63µm.

20. Procédé de rechargement d'au moins une surface de pièce en aluminiure de titane selon l'une quelconque des revendications 3 à 6 et 8, 17 et 18, **caractérisé en ce que** les poudres A et B ont une granulométrie inférieure à 150µm.

## Patentansprüche

1. Verbundverfahren durch Diffusionslöten von Werkstücken aus Titanaluminid, das die folgenden Verfahrensschritte aufweist:
a) Herstellung eines homogenen Gemischs von Pulvern A und B, wobei das Pulver A aus einer Titanaluminid-Legierung mit einem Gewichtsanteil von 40 % bis 90% des Gesamtgewichts besteht und das Pulver B aus einer Legierung auf Titan- oder Kupferbasis besteht, die bei einer Temperatur schmilzt, die deutlich unter der Schmelztemperatur des Pulvers A liegt, geeignet ist, das Pulver A chemisch zu durchfeuchten, und einen Gewichtsanteil von 10 % bis 60% des Gesamtgewichts hat, wobei diese Gewichtsanteile der Pulver A und B in Abhängigkeit von den Parametern der Durchführung des Verfahrens, der Temperatur und den Korngrößen der Pulver bestimmt werden;
b) Herstellung einer Masse durch Vermischen eines organischen Bindemittels, das an sich bei Lötverfahren bekannt ist, mit dem in dem vorherigen Verfahrensschritt a) hergestellten Pulvergemisch;
c) Auftragen der Masse direkt auf dem Spiel zwischen den zu verbindenden Werkstücken;
d) Erhitzen der in dem vorherigen Verfahrensschritt c) hergestellten Gesamtanordnung in einem Vakuumofen bei einer Temperatur, die zwischen 1000°C und 1300°C liegt, während einer Zeitdauer, die zwischen einigen Minuten und 6 Stunden beträgt.

2. Reparaturverfahren durch Diffusionslöten eines Werkstücks aus Titanaluminid, das die folgenden Verfahrensschritte aufweist:
a) Herstellung eines homogenen Gemischs von Pulvern A und B, wobei das Pulver A aus einer Titanaluminid-Legierung mit einem Gewichtsanteil von 40 % bis 90% des Gesamtgewichts besteht und das Pulver B aus einer Legierung auf Titan- oder Kupferbasis besteht, die bei einer Temperatur schmilzt, die deutlich unter der Schmelztemperatur des Pulvers A liegt, geeignet ist, das Pulver A chemisch zu durchfeuchten, und einen Gewichtsanteil von 10 % bis 60% des Gesamtgewichts hat, wobei diese Gewichtsanteile der Pulver A und B in Abhängigkeit von den Parametern der Durchführung des Verfahrens, der Temperatur und den Korngrößen der Pulver bestimmt werden;
b) Herstellung einer Masse durch Vermischen eines organischen Bindemittels, das an sich bei Lötverfahren bekannt ist, mit dem in dem vorherigen Verfahrensschritt a) hergestellten Pulvergemisch;
c) Auftragen der Masse direkt auf den Riss an dem zu reparierenden Werkstück;
d) Erhitzen der in dem vorherigen Verfahrensschritt c) hergestellten Gesamtanordnung in einem Vakuumofen bei einer Temperatur, die zwischen 1000°C und 1300°C liegt, während einer Zeitdauer, die zwischen einigen Minuten und 6 Stunden beträgt.

3. Verfahren des Auftraglötens auf mindestens einer Oberfläche eines Werkstücks aus Titanaluminid, das die folgenden Verfahrensschritte aufweist:
a) Herstellung eines homogenen Gemischs von Pulvern A und B, wobei das Pulver A aus einer Titanaluminid-Legierung mit einem Gewichtsanteil von 40 % bis 90% des Gesamtgewichts besteht und das Pulver B aus einer Legierung auf Titan- oder Kupferbasis besteht, die bei einer Temperatur schmilzt, die deutlich unter der Schmelztemperatur des Pulvers A liegt, geeignet ist, das Pulver A chemisch zu durchfeuchten, und einen Gewichtsanteil von 10 % bis 60% des Gesamtgewichts hat, wobei diese Gewichtsanteile der Pulver A und B in Abhängigkeit von den Parametern der Durchführung des Verfahrens, der Temperatur und den Korngrößen der Pulver bestimmt werden;
b) Herstellung einer Masse durch Vermischen eines organischen Bindemittels, das an sich bei Lötverfahren bekannt ist, mit dem in dem vorherigen Verfahrensschritt a) hergestellten Pulvergemisch;
c) Auftragen der Masse auf die Oberfläche des auftragzulötenden Werkstücks;
d) Erhitzen der in dem vorherigen Verfahrensschritt c) hergestellten Gesamtanordnung in einem Vakuumofen bei einer Temperatur, die zwischen 1000°C und 1300°C liegt, während einer Zeitdauer, die zwischen einigen Minuten und 6 Stunden beträgt.

4. Verfahren des Auftraglötens auf mindestens einer Oberfläche eines Werkstücks aus Titanaluminid nach Anspruch 3,
**dadurch gekennzeichnet,**
**dass** in dem Verfahrensschritt c) das Auftragen der Masse mittels einer Spritze erfolgt.

5. Verfahren des Auftraglötens auf mindestens einer Oberfläche eines Werkstücks aus Titanaluminid nach Anspruch 3,
**dadurch gekennzeichnet,**
**dass** in dem Verfahrensschritt c) das Auftragen der Masse durch Aufspritzen mit dem Plasmabrenner erfolgt.

6. Verfahren des Auftraglötens auf mindestens einer Oberfläche eines Werkstücks aus Titanaluminid nach Anspruch 3,
**dadurch gekennzeichnet,**
**dass** in dem Verfahrensschritt c) das Auftragen der Masse mit einem Pulverzufuhrmittel und einem Strahl mit hoher Energie wie z. B. einem Laserstrahl erfolgt.

7. Herstellungsverfahren für ein kompaktes Element mit bestimmter Form aus Titanaluminid, das die folgenden Verfahrensschritte aufweist:
a) Herstellung eines homogenen Gemischs von Pulvern A und B, wobei das Pulver A aus einer Titanaluminid-Legierung mit einem Gewichtsanteil von 40 % bis 90% des Gesamtgewichts besteht und das Pulver B aus einer Legierung auf Titan- oder Kupferbasis besteht, die bei einer Temperatur schmilzt, die deutlich unter der Schmelztemperatur des Pulvers A liegt, geeignet ist, das Pulver A chemisch zu durchfeuchten, und einen Gewichtsanteil von 10 % bis 60% des Gesamtgewichts hat, wobei diese Gewichtsanteile der Pulver A und B in Abhängigkeit von den Parametern der Durchführung des Verfahrens, der Temperatur und den Korngrößen der Pulver bestimmt werden;
b) Einbringen des in dem vorherigen Verfahrensschritt a) hergestellten Pulvergemischs in eine Pressform, deren Formgebung der Form des zu erzielenden kompakten Elements gleicht;
c) Erhitzen der in dem vorherigen Verfahrensschritt c) hergestellten Gesamtanordnung in einem Vakuumofen bei einer Temperatur, die zwischen 1000°C und 1300°C liegt, während einer Zeitdauer, die zwischen einigen Minuten und 6 Stunden beträgt.

8. Verfahren des Auftraglötens auf mindestens einer Oberfläche eines Werkstücks aus Titanaluminid unter Verwendung eines gemäß Anspruch 7 hergestellten kompakten Elements,
**dadurch gekennzeichnet,**
**dass** dieses kompakte Element auf der zu lötenden Oberfläche angeordnet und dann durch ein beliebiges, an sich bekanntes Mittel dort befestigt wird, und dass die Gesamtanordnung sodann in einem Vakuumofen bei einer Temperatur, die zwischen 1000°C und 1300°C liegt, während einer Zeitdauer, die zwischen einigen Minuten und 6 Stunden beträgt, erhitzt wird.

9. Verbundverfahren durch Diffusionslöten von Werkstücken aus Titanaluminid nach Anspruch 1,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichtsanteilen von Cu 10 bis 15, Ni 10 bis 15 und Ti die übrigen Anteile aufweist.

10. Verbundverfahren durch Diffusionslöten von Werkstücken aus Titanaluminid nach Anspruch 1,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichtsanteilen von Ti 30 und Cu die übrigen Anteile aufweist.

11. Verbundverfahren durch Diffusionslöten von Werkstücken aus Titanaluminid nach einem der Ansprüche 1, 9 und 10,
**dadurch gekennzeichnet,**
**dass** die Pulver A und B eine Korngröße von weniger als 63 µm aufweisen.

12. Verbundverfahren durch Diffusionslöten von Werkstücken aus Titanaluminid nach einem der Ansprüche 1, 9 und 10,
**dadurch gekennzeichnet,**
**dass** die Pulver A und B eine Korngröße von weniger als 150 µm aufweisen.

13. Reparaturverfahren durch Diffusionslöten eines Werkstücks aus Titanaluminid nach Anspruch 2,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichtsanteilen von Cu 10 bis 15, Ni 10 bis 15 und Ti die übrigen Anteile aufweist.

14. Reparaturverfahren durch Diffusionslöten eines Werkstücks aus Titanaluminid nach Anspruch 2,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichtsanteilen von Ti 30 und Cu die übrigen Anteile aufweist.

15. Reparaturverfahren durch Diffusionslöten eines Werkstücks aus Titanaluminid nach den Ansprüchen 2, 13 und 14,
**dadurch gekennzeichnet,**
**dass** die Pulver A und B eine Korngröße von weniger als 63 µm aufweisen.

16. Verbundverfahren durch Diffusionslöten von Werkstücken aus Titanaluminid nach den Ansprüchen 2, 13 und 14,
**dadurch gekennzeichnet,**
**dass** die Pulver A und B eine Korngröße von weniger als 150 µm aufweisen.

17. Verfahren des Auftraglötens auf mindestens einer Oberfläche eines Werkstücks aus Titanaluminid nach einem der Ansprüche 3 bis 6 und 8,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichts-. anteilen von Cu 10 bis 15, Ni 10 bis 15 und Ti die übrigen Anteile aufweist.

18. Verfahren des Auftraglötens auf mindestens einer Oberfläche eines Werkstücks aus Titanaluminid nach einem der Ansprüche 3 bis 6 und 8,
**dadurch gekennzeichnet,**
**dass** das Pulver A eine Zusammensetzung in Atomanteilen von Al 46 bis 50, Cr₂, Nb₂ und Ti die übrigen Anteile aufweist, und das Pulver B eine Zusammensetzung in Gewichtsanteilen von Ti 30 und Cu die übrigen Anteile aufweist.

19. Verfahren des Auftraglötens auf mindestens einer Oberfläche eines Werkstücks aus Titanaluminid nach einem der Ansprüche 3 bis 6 und 8, 17 und 18,
**dadurch gekennzeichnet,**
**dass** die Pulver A und B eine Korngröße von weniger als 63 µm aufweisen.

20. Verfahren des Auftraglötens auf mindestens einer Oberfläche eines Werkstücks aus Titanaluminid nach den Ansprüchen 3 bis 6 und 8, 17 und 18,
**dadurch gekennzeichnet,**
**dass** die Pulver A und B eine Korngröße von weniger als 150 µm aufweisen.

## Claims

1. Method of joining titanium aluminide workpieces by diffusion brazing, comprising the following steps of:
(a) producing a homogeneous blend of powders A and B, the powder A consisting of a titanium aluminide alloy having a proportion by weight of 40% to 90% of the total and the powder B consisting of a titanium- based or copper-based alloy, melting at a temperature substantially below the melting onset temperature of the powder A, capable of chemically wetting the powder A and having a proportion by weight of 10 to 60% of the total, the said proportions of powders A and B being determined according to the parameters for implementing the process, the temperature and the particle sizes of the powders;
(b) producing a paste by mixing the powder blend obtained in the previous step (a) with an organic binder known per se in the brazing art;
(c) depositing the paste vertically in line with the gap for joining the workpieces; and
(d) heating the assembly obtained in the previous step (c) in a vacuum furnace at a temperature of between 1000°C and 1300°C for a time of between a few minutes and 6 hours.

2. Method of repairing a titanium aluminide workpiece by diffusion brazing, comprising the following steps of:
(a) producing a homogeneous blend of powders A and B, the powder A consisting of a titanium aluminide alloy having a proportion by weight of 40% to 90% of the total and the powder B consisting of a titanium- based or copper-based alloy, melting at a temperature substantially below the melting onset temperature of the powder A, capable of chemically wetting the powder A and having a proportion by weight of 10 to 60% of the total, the said proportions of powders A and B being determined according to the parameters for implementing the process, the temperature and the particle sizes of the powders;
(b) producing a paste by mixing the powder blend obtained in the previous step (a) with an organic binder known per se in the brazing art;
(c) depositing the paste vertically in line with the gap for joining the workpieces; and
(d) heating the assembly obtained in the previous step (c) in a vacuum furnace at a temperature of between 1000°C and 1300°C for a time of between a few minutes and 6 hours.

3. Method of surfacing at least one surface of a titanium aluminide workpiece comprising the following steps of:
(a) producing a homogeneous blend of powders A and B, the powder A consisting of a titanium aluminide alloy having a proportion by weight of 40% to 90% of the total and the powder B consisting of a titanium- based or copper-based alloy, melting at a temperature substantially below the melting onset temperature of the powder A, capable of chemically wetting the powder A and having a proportion by weight of 10 to 60% of the total, the said proportions of powders A and B being determined according to the parameters for implementing the process, the temperature and the particle sizes of the powders;
(b) producing a paste by mixing the powder blend obtained in the previous step (a) with an organic binder known per se in the brazing art;
(c) depositing the paste on the surface of the workpiece to be surfaced; and
(d) heating the assembly obtained in the previous step (c) in a vacuum furnace at a temperature of between 1000°C and 1300°C for a time of between a few minutes and 6 hours.

4. Method of surfacing at least one surface of a titanium aluminide workpiece according to Claim 3, **characterized in that**, in step (c), the paste is deposited by means of a syringe.

5. Method of surfacing at least one surface of a titanium aluminide workpiece according to Claim 3, **characterized in that**, in step (c), the paste is deposited by plasma torch spraying.

6. Method of surfacing at least one surface of a titanium aluminide workpiece according to Claim 3, **characterized in that**, in step (c), the paste is deposited by spraying, using a powder feed assisted by a high-energy beam such as a laser.

7. Method of manufacturing a compact element of defined shape, made of titanium aluminide, comprising the following steps of:
(a) producing a homogeneous blend of powders A and B, the powder A consisting of a titanium aluminide alloy having a proportion by weight of 40% to 90% of the total and the powder B consisting of a titanium- based or copper-based alloy, melting at a temperature substantially below the melting onset temperature of the powder A, capable of chemically wetting the powder A and having a proportion by weight of 10 to 60% of the total, the said proportions of powders A and B being determined according to the parameters for implementing the process, the temperature and the particle sizes of the powders;
(b) placing the powder blend obtained in the preceding step (a) in a mould whose shape is homothetic with the shape of the compact element to be obtained;
(c) heating the assembly obtained in the preceding step (b) in a vacuum furnace, at a temperature of between 1000°C and 1300°C for a time of between a few minutes and 1 hour.

8. Method of surfacing at least one surface of a titanium aluminide workpiece, using a compact element obtained according to Claim 7 and **characterized in that** the said compact element is placed on and then fixed to the surface to be surfaced by any means known per se and then the assembly is heated in a vacuum furnace, at a temperature of between 1000°C and 1300°C for a time of between a few minutes and 6 hours.

9. Method of joining titanium aluminide workpieces by diffusion brazing according to Claim 1, **characterized in that** the powder A has a composition of 46 to 50 at% Al, 2 at% Cr, 2 at% Nb, and Ti for the balance, and the powder B has a composition of 10 to 15 wt% Cu, 10 to 15 wt% Ni and Ti for the balance.

10. Method of joining titanium aluminide workpieces by diffusion brazing according to Claim 1, **characterized in that** the powder A has a composition of 46 to 50 at% Al, 2 at% Cr, 2 at% Nb, and Ti for the balance, and the powder B has a composition of 30 wt% Ti and Cu for the balance.

11. Method of joining titanium aluminide workpieces by diffusion brazing according to any one of Claims 1, 9 and 10, **characterized in that** the powders A and B have a particle size of less than 63 µm.

12. Method of assembling titanium aluminide workpieces by diffusion brazing according to any one of Claims 1, 9 and 10, **characterized in that** the powders A and B have a particle size of less than 150 µm.

13. Method of repairing a titanium aluminide workpiece by diffusion brazing according to Claim 2, **characterized in that** the powder A has a composition of 46 to 50 at% Al, 2 at% Cr, 2 at% Nb, and Ti for the balance, and the powder B has a composition of 10 to 15 wt% Cu, 10 to 15 wt% Ni and Ti for the balance.

14. Method of repairing a titanium aluminide workpiece by diffusion brazing according to Claim 2, **characterized in that** the powder A has a composition of 46 to 50 at% Al, 2 at% Cr, 2 at% Nb, and Ti for the balance, and the powder B has a composition of 30 wt% Ti and Cu for the balance.

15. Method of repairing a titanium aluminide workpiece by diffusion brazing according to Claims 2, 13 and 14, **characterized in that** the powders A and B have a particle size of less than 63 µm.

16. Method of repairing a titanium aluminide workpiece by diffusion brazing according to Claims 2, 13 and 14, **characterized in that** the powders A and B have a particle size of less than 150 µm.

17. Method of surfacing at least one surface of a titanium aluminide workpiece according to any one of Claims 3 to 6 and 8, **characterized in that** the powder A has a composition of 56 to 50 at% Al, 2 at% Cr, 2 at% Nb, and Ti for the balance, and the powder B has a composition of 10 to 15 wt% Cu, 10 to 15 wt% Ni and Ti for the balance.

18. Method of surfacing at least one surface of a titanium aluminide workpiece according to any one of Claims 3 to 6 and 8, **characterized in that** the powder A has a composition of 46 to 50 at% Al, 2 at% Cr, 2 at% Nb, and Ti for the balance, and the powder B has a composition of 30 wt% Ti and Cu for the balance.

19. Method of surfacing at least one surface of a titanium aluminide workpiece according to any one of claims 3 to 6 and 8, 17 and 18, **characterized in that** the powders A and B have a particle size of less than 63 µm.

20. Method of surfacing at least one surface of a titanium aluminide workpiece according to any one of claims 3 to 6 and 8, 17 and 18, **characterized in that** the powders A and B have a particle size of less than 150 µm.
